(19) Europäisches Patentamt / European Patent Office / Office européen des brevets

(11) **EP 2 234 462 A2**

(12) **EUROPEAN PATENT APPLICATION**

(43) Date of publication:
**29.09.2010 Bulletin 2010/39**

(51) Int Cl.:
**H05H 1/24** $^{(2006.01)}$

(21) Application number: **10250437.0**

(22) Date of filing: **10.03.2010**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA ME RS**

(30) Priority: **25.03.2009 JP 2009073024**

(71) Applicant: **NGK Insulators, Ltd.
Nagoya-shi, Aichi 467-8530 (JP)**

(72) Inventors:
• **Mizuno, Hiroshi
  Nagoya-shi, Aichi 467-8530 (JP)**
• **Takahashi, Michio
  Nagoya-shi, Aichi 467-8530 (JP)**

(74) Representative: **Paget, Hugh Charles Edward et al
Mewburn Ellis LLP
33 Gutter Lane
London
EC2V 8AS (GB)**

(54) **Reactor for reforming reactions**

(57) A reactor 1A includes a reaction vessel 10 having an inlet 4 for to-be-reformed gas 2 and an outlet 8 for reformed gas 6, a pair of electrodes 12 for plasma generation, disposed in the internal space of the reactor vessel 10 so as to face each other, a power source 14 for applying a voltage to the pair of electrodes 12, and a catalyst for promoting the reforming reaction of to-be-reformed gas 2, wherein one of the pair of electrodes 12 is a linear electrode 32, the other of the pair of electrodes 12 is a honeycomb electrode 34A made of a conductive ceramics, the catalyst is loaded on the partition walls of the honeycomb electrode 34A, and the ratio of the maximum outer diameter $d_1$ of each cell-opening end face of the honeycomb electrode 34A to the length $L_1$ of the honeycomb electrode 34A in the cell-extending direction is in a range of 0.50 to 1.2.

EP 2 234 462 A2

## Description

### TECHNICAL FIELD

The present invention relates to a reactor in which reforming reaction is advanced by a plasma generated between a pair of electrodes and a catalyst for promoting the reforming reaction.

### BACKGROUND ART

In recent years, hydrogen has drawn attention as a clean energy. As a process for obtaining such hydrogen, there is known a reforming reaction for the hydrocarbon contained in gasoline, kerosene, gas oil or the like. However, a high temperature of 700 to 900°C is generally required in the reforming reaction of the hydrocarbon contained in gasoline or the like; therefore, a large reforming apparatus is needed and, moreover, a large starting energy and a long starting time are required in order to advance the reforming reaction. Hence, there is being investigated a technique of applying a pulse voltage or the like to a pair of electrodes to generate a plasma and utilizing the plasma to conduct a reforming reaction at a low temperature at a high efficiency.

There is, for example, a proposal on a plasma fuel converter in which glow discharge is generated between a pair of electrodes and the plasma generated by the glow discharge is utilized to reform a fuel (see Patent Document 1).

There is also a proposal on a method and apparatus in which pulse discharge is conducted in a mixed gas (a to-be-reformed gas) of alcohol and steam to generate a plasma and a reforming reaction of the mixed gas is conducted using the plasma, to generate hydrogen (see Patent Document 2).

There is further a proposal on a reformer in which a pair of electrodes are placed inside the cells of a honeycomb structure made of an insulating material (e.g. cordierite), discharge is conducted inside the cells to generate a plasma, and a reforming reaction is conducted using the plasma (see Patent Document 4).

The plasma fuel converter, etc. described in the Patent Documents 1 to 3, as compared with the conventional art, have an advantage that the reforming of hydrocarbon can be carried out at a relatively low cost under the mild conditions of low temperature and normal pressure. However, they have not been fully satisfactory in the reaction efficiency of reforming reaction.

Hence, it is being attempted to promote the reforming reaction and enhance the reaction efficiency of reforming reaction by, in conducting a reforming reaction using a plasma, using further a catalyst for promotion of reforming reaction. In this case, the reforming reaction is considered to proceed synergistically by the action of plasma and the action of catalyst.

There is, for example, a proposal on a hydrocarbon reforming apparatus which have a gas-mixing vessel for mixing a hydrocarbon and steam, a power source and a pair of electrodes present inside the gas-mixing vessel and wherein a voltage of particular pulse frequency is applied to the pair of electrodes to generate a plasma and a conversion reaction into hydrogen is conducted using the plasma (see Patent Document 4). The Patent Document 5 describes that the conversion reaction can be promoted by filling a particulate catalyst inside the gas-mixing vessel (a so-called packed bed method).

There is also a proposal on a fuel reforming apparatus which has a reactor, a pair of needle-like electrodes disposed inside the reactor so as to face each other, a device for voltage application, a particulate oxide catalyst, and a catalyst-holding means for holding the oxide catalyst in the reactor (see Patent Document 5).

Patent Document 1: National Publication of International Patent Application No. 2003-514166
Patent Document 2: JP-A-2003-73103
Patent Document 3: JP-A-2006-248847
Patent Document 4: JP-A-2004-345879
Patent Document 5: JP-A-2006-56748

### SUMMARY OF THE INVENTION

The hydrocarbon reforming apparatus, etc. described in the Patent Document 4 or 5 utilize the plasma generated by discharge and further use a catalyst; therefore, the promotion of reforming reaction and the resultant enhanced reaction efficiency of reforming reaction can be expected.

However, since the hydrocarbon reforming apparatus, etc. described in the Patent Document 4 or 5 use a particulate catalyst, the contact between catalyst particles becomes a point contact, making inferior the heat transfer between catalyst particles. Accordingly, there has been a problem of low startability of reforming reaction. Further, when the packed bed method is employed, a to-be-reformed gas passes through the gaps between the catalyst particles filled in the reactor and is used only at a space velocity of several thousands h$^{-1}$ or lower. That is, pressure loss of the to-be-reformed gas becomes large when the to-be-reformed gas is passed in a large amount. Accordingly, it has been unable to increase the treatment rate of the to-be-reformed gas, making it impossible to produce a reformed gas (hydrogen) in a large amount.

The present invention has been made in view of the above-mentioned problems and has a task to provide a reactor which is superior in the reaction efficiency of reforming reaction, can produce a large amount of a reformed gas, is low in power consumption, and is small in the load to electrode and long in the use time of electrode.

The present inventors made a study in order to solve the above-mentioned problems of the prior art. As a result, it was found that the problems could be solved by using, as one of a pair of electrodes for generating a plasma, a honeycomb-shaped electrode (a honeycomb electrode) made of a conductive ceramics and further by designing the shape of the honeycomb electrode precisely. The finding has led to the completion of the present invention. Specifically, a reactor described below is provided by the present invention.

[1] A reactor comprising

a reaction vessel having an inlet for a to-be-reformed gas and an outlet for a reformed gas,
a pair of electrodes for plasma generation, disposed in an internal space of the reaction vessel so as to face each other,
a power source for applying a voltage to the pair of electrodes, and
a catalyst for promoting the reforming reaction of the to-be-reformed gas,

wherein
one of the pair of electrodes is a linear electrode,
the other of the pair of electrodes is a honeycomb electrode made of a conductive ceramics having a plurality of cells to act as gas passages partitioned by partition walls,
the catalyst is loaded on the partition walls of the honeycomb electrode, and
the honeycomb electrode has a cell density of 4 to 192 cells/cm$^2$ and the ratio of the maximum outer diameter of each cell-opening end face of the honeycomb electrode to the
length of the honeycomb electrode in the cell-extending direction is in a range of 0.50 to 1.2.

[2] A reactor according to [1], wherein the honeycomb electrode is made of the conductive ceramics including silicon carbide.

[3] A reactor according to [1] or [2], wherein the honeycomb electrode has a density of 0.5 to 4.0 g/cm$^3$.

[4] A reactor according to any one of [1] to [3], wherein the honeycomb electrode has a thermal conductivity of 10 to 300 W/mk.

[5] A reactor according to any one of [1] to [4], wherein the power source is a high-voltage pulse power source using a static induction type thyristor.

EFFECT OF THE INVENTION

The reactor of the present invention is superior in the reaction efficiency of reforming reaction, can produce a large amount of a reformed gas, is low in power consumption, and is small in the load to electrode and long in the use time of electrode.

BRIEF DESCRIPTION OF THE DRAWINGS

Fig. 1A is a schematic view showing an embodiment of the reactor of the present invention.
Fig. 1B is a perspective view showing the honeycomb electrode constituting the reactor shown in Fig. 1A.
Fig. 2 is a perspective view showing an embodiment of the honeycomb electrode which is a constituent member of the reactor of the present invention.
Fig. 3 is a perspective view showing other embodiment of the honeycomb electrode which is a constituent member of the reactor of the present invention.
Fig. 4A is a schematic view showing an embodiment of the reactor of Comparative Example 1.
Fig. 4B is a perspective view showing the honeycomb electrode constituting the reactor shown in Fig. 4A.

(Description of Reference Numerals)

1A and 100 are each a reactor; 2 is a
to-be-reformed gas; 4 is an inlet; 6 is a reformed gas; 8 is an outlet; 10 is a reaction vessel; 12 is an electrode; 14 is a power source; 16 is a cell; 32 is a linear electrode; 34, 34A, 34B and 34C are each a honeycomb electrode; 36 and 36A are each a honeycomb electrode support; and 42 is a plasma-generating zone.

DESCRIPTION OF THE PREFERRED EMBODIMENTS

Embodiments of the reactor of the present invention are described below. However, the present invention includes various reactors satisfying the matters specified by the present invention and is in no way restricted to the following embodiments.

[1] Characteristics of the reactor of the present invention

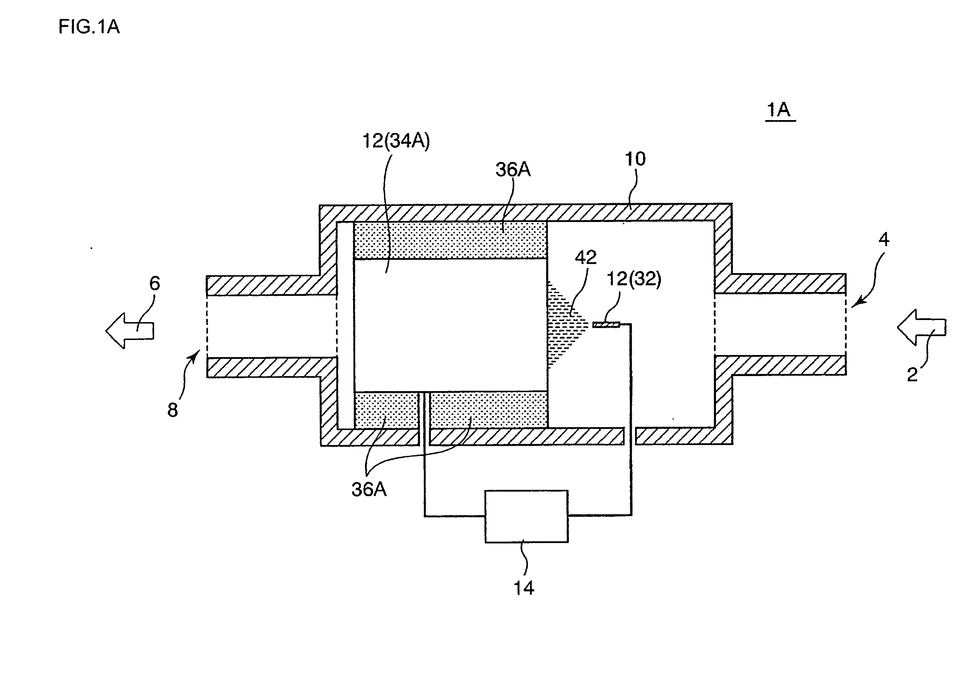

The reactor of the present invention is **characterized in that**, as shown in the reactor 1A shown in Fig. 1A, one of a pair of electrodes 12 is a linear electrode 32, the other of the pair of electrodes 12 is a honeycomb electrode 34A which is made of a conductive ceramics and wherein a plurality of cells to act as a gas passage are formed by being surrounded by partition walls, a catalyst is loaded on the partition walls of the honeycomb electrode 34A, the honeycomb electrode 34A has a cell density of 4 to 192 cells/cm$^2$, and the ratio of the maximum outer diameter of each cell-opening end face of the honeycomb electrode 34 to the length of the honeycomb electrode 34A in the cell-extending direction is in a range of 0.50 to 1.2.
By thus using a honeycomb electrode 34A as the other of the pair of electrodes 12, as compared with a case of using needle-shaped electrodes or flat plate-shaped electrodes, the thermal deterioration of electrode in discharge is small and the electrodes 12 can have higher durability. Therefore, the present reactor can also be used preferably in applications such as fuel reformer for vehicle mounting wherein stable supply of a reformed gas is required over a long period of time.
Also, when a honeycomb electrode 34A is used as the other of the pair of electrodes 12, a voltage can be applied to the whole portion of the honeycomb electrode 34A; accordingly, the area of discharge occurrence becomes larger. As a result, as compared with a case of using a pair of needle-shaped electrodes or a pair of flat plate-shaped electrodes, the reaction zone can be made wider; the startability and reaction efficiency of reforming reaction can be enhanced; resultantly, the reaction efficiency of reforming reaction can be enhanced even when the inner diameter of reaction vessel 10 has been enlarged.
Further, since the honeycomb electrode 34A has a honeycomb structure having partition walls, a catalyst is easily loaded thereon. Therefore, by loading a catalyst which promotes a reforming reaction, the reforming reaction of a to-be-reformed gas 2 can be advanced easily. Thereby, the action of plasma and the action of catalyst can be made synergistic and the reforming reaction can be advanced at a high efficiency.
When a catalyst is loaded on the partition walls of the honeycomb electrode 34A, as compared with when a particulate catalyst is filled in the packed bed method, cells to act as a gas passage are secured and thereby the to-be-reformed gas 2 passes easily in the reaction vessel 10. As a result, the to-be-reformed gas 2 can be treated at a space velocity of several tens of thousands to several hundreds of thousands h$^{-1}$ (that is, at a high treatment rate).
Furthermore, when a catalyst is loaded on the partition walls of the honeycomb electrode 34A, as compared with when a particulate catalyst is filled in the packed bed method, the heat transfer between catalyst particles is rapid, enhancing the startability of reforming reaction. As a result, the treatment rate and treatment amount of a to-be-reformed gas 2 can be enhanced strikingly and a large amount of a reformed gas 6 can be produced. Thereby, the present reactor can also be used, for example, in early activation of catalyst during the engine start of internal combustion engine (cold start application).

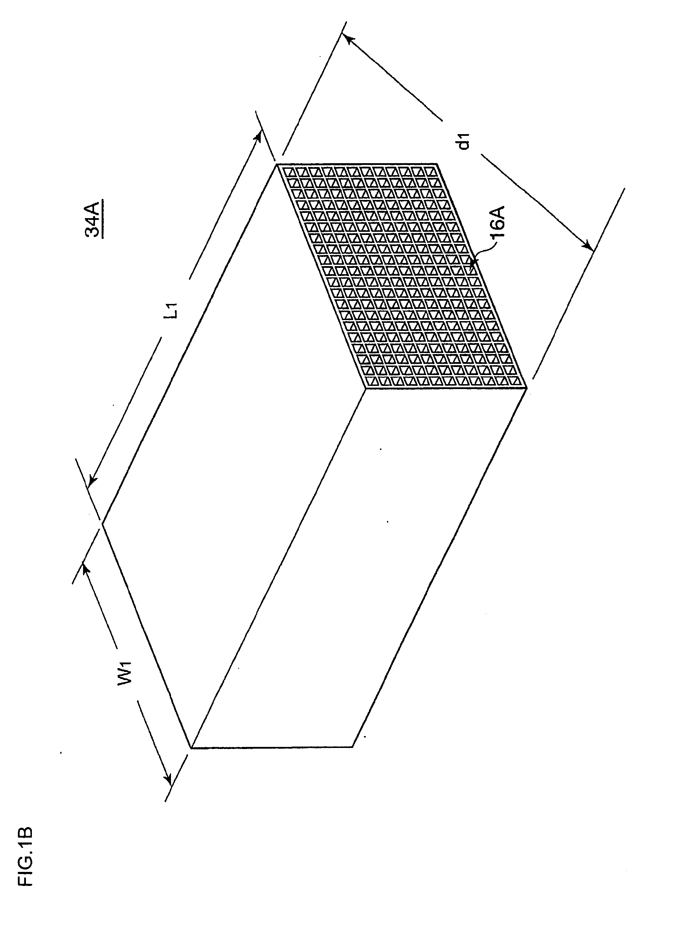

Also, when, as shown in Fig. 1B, the ratio of the maximum outer diameter $d_1$ of the cell 16A-opening end face of the honeycomb electrode 34A to the length $L_1$ of the honeycomb electrode in the cell 16A-extending direction is in a particular range, the honeycomb electrode 34A is long in its cell 16A-extending direction and each cell 16A of the honeycomb electrode 34A is long as well. As a result, the contact time (i.e. reaction time) between the to-be-reformed gas 2 and the catalyst loaded on the partition walls surrounding each cell 16A is extended and the reforming reaction is further promoted by the effect of the catalyst and by the increase in the reaction heat generated in each cell 16A. Thus, the reaction efficiency of reforming reaction is enhanced by the synergistic effect of the action of plasma and the action of catalyst.

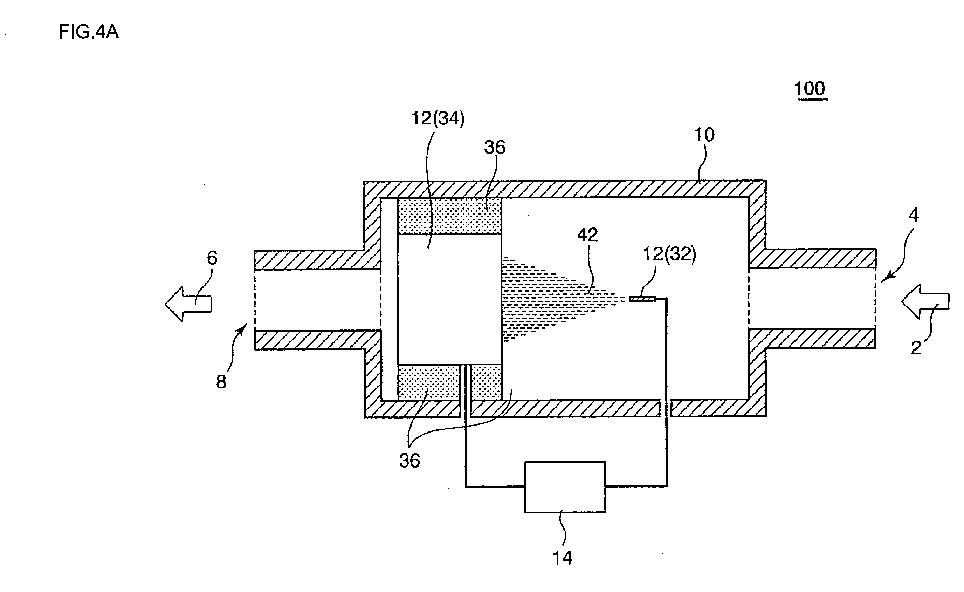

Meanwhile, when, as seen in the reactor 100 of Fig. 4A, the honeycomb electrode 34 is short in its cell-extending direction, the contact time (i.e. reaction time) between the to-be-reformed gas 2 and the catalyst loaded on the partition walls surrounding each cell is short and there is a case that the effect of catalyst is not exhibited sufficiently. Also, there is a fear that the reformed gas 6 passes through each cell of honeycomb electrode 34 before the reaction heat generated in each cell is utilized, which may make insufficient the promotion of reforming reaction.

Further, when the honeycomb electrode is long in its cell-extending direction, the reaction efficiency of reforming reaction can be maintained even when the plasma-generating zone 42 is made small; therefore, the voltage applied between the linear electrode 32 and the honeycomb electrode 34 can be made small. Accordingly, the power required for the reforming reaction can be reduced, the load to the honeycomb electrode 34 and the linear electrode 32 can be reduced, resultantly, the durability (use time) of the honeycomb electrode 34 and the linear electrode 32 can be extended.

Furthermore, when the honeycomb electrode is long in its cell-extending direction, different catalysts can be loaded on the partition walls surrounding each cell of honeycomb electrode, in order along the lengthwise direction of cell. Thereby, it becomes possible to change the kind of reforming reaction in the middle of cell passage to conduct reforming reactions of two or more stages.

[2] Constituent members of reactor

As the constituent members of the present reactor, there can be mentioned, as seen in the reactor 1A of Fig. 1A, a honeycomb electrode 34, a linear electrode 32, a catalyst, a reaction vessel 10, a power source 14, etc.

[2-1] Honeycomb electrode

In the reactor of the present invention, as shown in Fig. 1A, a pair of electrodes 12 are disposed so as to face each other, in the internal space of a reaction vessel 10; and a plasma is generated by applying a voltage to the pair of electrodes 12. In the reactor of the present invention, as shown in Fig. 1A and Fig. 1B, one of the electrodes is a honeycomb electrode 34. In the present Specification, "honeycomb electrode" means an electrode having a honeycomb structure, which is made of a conductive ceramics and wherein a plurality of cells to act as a gas passage are formed by being surrounded by partition walls.

The structure of the honeycomb structure is sufficient when it is a so-called honeycomb structure in which a plurality of cells to act as gas passages are formed by being surrounded by partition walls. As to, for example, the cell shape (the cell sectional shape when each cell has been cut in a direction perpendicular to the cell-extending direction), a desired shaped can be appropriately selected from circle, oval, triangle, tetragon, hexagon, other polygon, etc.

In the reactor of the present invention, the external shape (overall shape) of the honeycomb electrode is formed so that the ratio of the maximum outer diameter of each cell-opening end face of honeycomb electrode to the length of honeycomb electrode in its cell-extending direction is in a range of 0.50 to 1.2. Thereby, the contact time (i.e. reaction time) between to-be-reformed gas and catalyst can be extended and the reforming reaction is promoted further by the effect of catalyst and also by the increase in the reaction heat generated in each cell. Thus, the reaction efficiency of reforming reaction is enhanced. In order to obtain this effect reliably, the above ratio is more preferably in a range of 0.50 to 1.0.

The length of the honeycomb electrode in the cell-extending direction is preferably 25 to 60 mm, more preferably 30 to 60 mm. When the length is smaller than 25 mm, the contact time between to-be-reformed gas and catalyst is short and there is a case that the most of the hydrocarbons contained in the to-be-reformed gas leaves the reaction vessel without being reformed. Meanwhile, when the length is larger than 60 mm, the contact time between to-be-reformed gas and catalyst is extended, but the pressure loss when the to-be-reformed gas passes through the cells of the honeycomb electrode, is large and there is a fear that the space velocity when the to-be-reformed gas is treated, is low. Further, the reaction heat does not arrive at the ends of the honeycomb electrode and there is a case that no high reaction efficiency owing to the temperature increase of the honeycomb electrode is obtained.

The maximum outer diameter of each cell-opening end face of the honeycomb electrode is preferably 25 to 35 mm, more preferably 27 to 33 mm. When the maximum outer diameter is smaller than 25 mm, there may be an increase in pressure loss. Meanwhile, when the maximum outer diameter is larger than 35 mm, a large power is needed for plasma generation and moreover there is a case that the honeycomb electrode is damaged by melting.

Incidentally, the "maximum outer diameter" referred to in the present Specification means the length of the longest straight line connecting any two points of the circumference of each cell-opening end face of the honeycomb electrode. When the shape of the cell-opening end face of the honeycomb electrode is, for example, a circle, the "maximum outer diameter" of the cell-opening end face is equal to the diameter of the circle; and when the shape is a rectangle, the maximum outer diameter" is equal to the diagonal of the rectangle.

In the present invention, the cell density (number of cells per unit sectional area) of the honeycomb electrode is set in a range of 4 to 192 cells/cm$^2$ (25 to 1,200 cells/in$^2$). When the cell density is smaller than 4 cells/cm$^2$ (25 cells/in$^2$), the reformed gas passes through the cells of honeycomb electrode before the reaction heat generated in the cells is utilized, and there is a case that the contact time (i.e. reaction time) between the to-be-reformed gas and the catalyst loaded on the partition walls of honeycomb electrode is short. Accordingly, the effect of catalyst is not exhibited sufficiently and there is a fear that the reforming reaction is not fully promoted.

Meanwhile, when the cell density exceeds 192 cells/cm$^2$ (1,200 cells/in$^2$), the contact time between the to-be-reformed gas and the catalyst is extended, but the pressure loss when the to-be-reformed gas passes through the cells of the honeycomb electrode, is large and there is a

case that the space velocity when the to-be-reformed gas is treated, is low. Further, the reaction heat does not arrive at the ends of the honeycomb electrode and there is a fear that no high reaction efficiency owing to the temperature increase of the honeycomb electrode is obtained.

When, as in the reactor of the present invention, the honeycomb electrode is long in its cell-extending direction, there is a fear that the pressure loss increases depending upon the length in cell-extending direction. In that case, the pressure loss can be decreased by making small the cell density of honeycomb electrode. Conversely when the honeycomb electrode is short in its cell-extending direction, the contact time (i.e. reaction time) between the to-be-reformed gas and the catalyst loaded on the partition walls can be extended by making large the cell density of honeycomb electrode and the effect of catalyst can be exhibited sufficiently.

Also, the thickness of partition wall (the wall thickness) is appropriately designed so as to meet the intended application of the present reactor, and there is no particular restriction. When the present reactor is used, for example, for hydrocarbon reforming and hydrogen production, the wall thickness is preferably 50 $\mu$m to 2 mm, more preferably 60 to 500 $\mu$m. When the wall thickness is smaller than 50 $\mu$m, there is a reduction in mechanical strength and there may appear the breakage which is caused by impact or by thermal stress due to temperature change. Meanwhile, when the wall thickness is larger than 2 mm, the proportion of cell volume in honeycomb electrode is small and there is a fear that the pressure loss in passing of a to-be-reformed gas is too large.

In the reactor of the present invention, it is preferred to seal the two openings of each outermost cell of honeycomb electrode. Thereby, each outermost cell portion of honeycomb electrode becomes a heat-insulating layer and the reaction heat generated in each cell can be utilized effectively. Also, the catalyst loaded on the partition walls surrounding cells can be activated at an early timing. Accordingly, the reaction efficiency of reforming reaction is enhanced further. Such a constitution is preferred because, when the present reactor is used by being mounted on vehicle, the temperature of introduced gas at cold start (engine cold start) can be elevated easily and the early activation of catalyst is easy.

Incidentally, the "outermost cell" means, of the plurality of cells formed in rows and columns, each cell located adjacent to each outer wall of the honeycomb electrode. Therefore, there is no cell between each outermost cell and each outer wall of the honeycomb electrode. Also, the "sealing of the two openings" means that the two openings of each cell are plugged with a ceramics slurry, a paste or the like to plug the cell.

The "conductive ceramics" constituting the honeycomb electrode is preferably silicon carbide. However, the whole electrode need not be constituted by silicon carbide as long as the honeycomb electrode has conductivity. That is, in the reactor of the present invention, the honeycomb electrode is preferably made of a conductive ceramics containing silicon carbide. In this case, the content of silicon carbide in honeycomb electrode is preferably 50 mass % or more, more preferably 60 mass % or more in order to suppress a reduction in conductivity.

Also, the honeycomb electrode is preferably a porous body of 30 to 60% in porosity, more preferably a porous body of 40 to 50% in porosity. When the porosity is smaller than 30%, the minute discharge occurring in the gaps between ceramics particles may become insufficient. Meanwhile, when the porosity is larger than 60%, there may arise inconveniences such as insufficient strength of partition wall and the like.

The honeycomb electrode is preferably a porous body of 0.5 to 4.0 g/cm$^3$ in density, more preferably a porous body of 1.0 to 3.0 g/cm$^3$ in density. When the density is lower than 0.5 /cm$^3$, the strength of the honeycomb electrode per se is insufficient and the honeycomb electrode may cause breakage by impact. Meanwhile, when the density is higher than 4.0 g/cm$^3$, processing during production is difficult, which may incur an increase in production cost.

The honeycomb electrode has an electric resistance of preferably 2 $\Omega$ or smaller, more preferably 0.3 $\Omega$ or

smaller when a voltage of 3.5 V has been applied at 180°C, for securement of conductivity. In order to achieve such an electric resistance, it is preferred to use silicon carbide as the conductive ceramics and then conducting a treatment such as mixing of the silicon carbide with metallic silicon or making of a composite of the silicon carbide and metallic silicon.

Incidentally, the "electric resistance" referred herein means a value obtained by cutting out, from a honeycomb electrode, a rectangular prism of 3.3 cm in length and 1.1 cm$^2$ in sectional area (area of a section perpendicular to the flow direction of gas) along the gas-flowing direction (cell-extending direction) of honeycomb electrode and measuring, at 180°C, the electric resistance of the prism, by a constant DC four-terminal method with a distance between voltage terminals being 2.3 cm.

The honeycomb electrode has a thermal conductivity of preferably 5 to 30 W/mK, more preferably 10 to 200 W/mK, particularly preferably 20 to 100 W/mK, for the activation of loaded catalyst. When the thermal conductivity is lower than 5 W/mK, there is a fear that a time is taken for the activation of loaded catalyst. Meanwhile, when the thermal conductivity is higher than 300 W/mK, the heat radiation to outside is large and there is a fear that the loaded catalyst is not activated sufficiently. As the conductive ceramics having such a thermal conductivity, there can be mentioned, for example, silicon carbide, silicon nitride and aluminum nitride.

The honeycomb electrode is disposed so that the electrode-to-electrode distance (the distance from the linear electrode side end face of the honeycomb electrode to the linear electrode) is preferably 1 to 30 mm, more preferably 5 to 10 mm. When the electrode-to-electrode distance is smaller than 1 mm, field concentration takes place easily and short-circuit starting from the point of field concentration may take place easily. Also, there is a case that plasma discharge takes place between the electrodes but the amount of hydrogen produced by the reforming reaction of hydrocarbon is small. Meanwhile, when the distance is larger than 30 mm, plasma discharge hardly takes place stably, which may reduce the efficiency of plasma generation.

[2-2] Linear electrode

The reactor of the present invention has, as shown in Fig. 1A, a linear electrode 32 which forms a pair of electrodes 12 with the honeycomb electrode 34A. The "linear electrode" referred in the present Specification means a linear or planar electrode extending in one direction and includes even an electrode having a shape formed by bending of the above linear or planar electrode. There can be mentioned, for example, linear electrodes such as needle-shaped electrode, rod-shaped electrode, plate (rectangle)-shaped electrode and the like, and bent-shaped electrodes such as L-shaped electrode and the like. At least one linear electrode is disposed.

The length of the linear electrode is preferably 3 to 50 mm, more preferably 5 to 30mm in order to make small the size of the present reactor. When the length is smaller than 3 mm, the handling of linear electrode is unstable in production of the reactor, which may make difficult the fixation of linear electrode. Meanwhile, when the length is larger than 50 mm, the linear electrode may be bent easily by the contact with the to-be-reformed gas which is flowing.

The outer diameter of the linear electrode is preferably 0.1 to 5 mm, more preferably 0.5 to 3 mm when the linear electrode is needle-shaped or rod-shaped. When the outer diameter is smaller than 0.1 mm, the linear electrode tends to be bent by the contact with the to-be-reformed gas which is flowing, which may make plasma discharge unstable. Meanwhile, when the outer diameter is larger than 5 mm, plasma discharge may be hard to control.

The linear electrode is preferably constituted by a material of high conductivity, specifically a metal, an alloy, a conductive ceramics or the like, in order to secure the conductivity. As the metal of high conductivity, there can be mentioned stainless steel, nickel, copper, aluminum, iron, etc.; as the alloy of high conductivity, there can be mentioned aluminum-copper alloy, titanium alloy, Inconel (trade name), etc.; as the conductive ceramics, there can be mentioned silicon carbide, etc.; as other material, there can be mentioned carbon, etc. Of these, a conductive material of high corrosion resistance, such as Inconel (trade name) or the like is used preferably.

[2-3] Catalyst

The reactor of the present invention has a catalyst for promoting the reforming reaction of a to-be-reformed gas, which is loaded on the partition walls of honeycomb electrode.

As to the catalyst, there is no particular restriction as long as it is a substance having the above-mentioned catalytic activity. There can be mentioned, for example, a substance containing at least one kind of element selected from the group consisting of noble metal (e.g. platinum, rhodium, palladium, ruthenium, indium, silver or gold), aluminum, nickel, zirconium, titanium, cerium, cobalt, manganese, zinc, copper, tin, iron, niobium, magnesium, lanthanum, samarium, bismuth and barium. The substance containing such an element includes various forms such as simple metal, metal oxide, other compound (e.g. chloride or sulfate) and the like. These substances may be used singly or in combination of two or more kinds.

The loading amount of the catalyst is preferably 0.05 to 70 g/liter, more preferably 0.1 to 40 g/liter. When the loading amount is smaller than 0.05 g/liter, the exhibition of catalytic activity may be difficult. Meanwhile, when the loading amount is larger than 70 g/liter, the production cost of the reactor may increase.

The catalyst is loaded on the partition walls of the honeycomb electrode preferably in the form of catalyst-coated fine particles obtained by coating a catalyst on carrier fine particles. Such a form has an advantage that the efficiency of the reaction of to-be-reformed gas by catalyst is enhanced. As the carrier fine particles, a ceramics powder, for example, can be used. There is no particular restriction as to the kind of the ceramics; however, there can preferably be used powders of metal oxides, particularly silica, alumina, titania, zirconia, ceria, zeolite, mordenite, silica alumina, metal silicate, cordierite, etc. These ceramics may be used singly or in combination of two or more kinds. Catalyst loading can be conducted by coating such catalyst-coated fine particles on the partition walls of honeycomb electrode.

The average particle diameter of the above-mentioned powders is preferably 0.01 to 50 $\mu$m, more preferably 0.1 to 20 $\mu$m. When the average particle diameter is smaller than 0.01 $\mu$m, the loading of catalyst on carrier fine particles may be difficult. Meanwhile, when the average particle diameter is larger than 50 $\mu$m, the catalyst-coated fine particles may easily be peeled off from the honeycomb electrode.

The mass ratio of the catalyst to the carrier fine particles is preferably 0.1 to 20 mass %, more preferably 1 to 10 mass %. When the mass ratio of catalyst is smaller than 0.1 mass %, the reforming reaction may proceed hardly. Meanwhile, when the mass ratio is larger than 20 mass %, there is no uniform dispersion of catalyst and the catalyst is easily agglomerated; therefore, the uniform loading of catalyst on carrier fine particles is difficult. Accordingly, even with the addition of catalyst in an amount exceeding 20 mass %, there is no effect of catalyst addition corresponding to the amount and there may be no promotion of reforming reaction.

The catalyst-coated fine particles can be obtained, for example, by infiltrating a catalyst component-containing aqueous solution into a ceramics powder later becoming carrier fine particles, followed by drying and firing. To the catalyst-coated fine particles obtained are added a dispersing medium (e.g. water) and other additives, to prepare a coating fluid (a slurry); this slurry is coated on the partition walls of honeycomb electrode; thereby, the catalyst can be loaded on the partition walls of honeycomb electrode.

[2-4] Reaction vessel

The reactor of the present invention has, as shown in Fig. 1A, a reaction vessel 10 provided with an inlet 4 of a to-be-reformed gas 2 and an outlet 8 of a reformed gas 6.

The reaction vessel is a hollow structure provided with the inlet of the to-be-reformed gas and the outlet of the reformed gas. The reaction vessel is required to be hollow for gas passage therethrough; however, there is no other restriction as to the shape of the reaction vessel and there can be used, for example, a cylindrical, quadrangular prism-like, or other structure. As to the maximum inner diameter of the reaction vessel, there is no particular restriction, either, and an appropriate size can be employed depending upon the intended application of the reactor.

As to the material for reaction vessel, there is no particular restriction, either. However, the reaction vessel is constituted preferably by a metal of good processability (e.g. stainless steel). However, for example, the portion of reaction vessel inside where the electrode is installed, such as honeycomb electrode support, is constituted preferably by an insulating material in order to prevent short-circuit.

[2-5] Honeycomb electrode supports

In the reactor of the present invention, it is preferred to dispose the honeycomb electrode inside the reaction vessel via honeycomb electrode supports made of an insulating material, in order to, for example, prevent the short-circuit between the honeycomb electrode and the metal-made reaction vessel. Explaining more specifically, as shown in the reactor 1A of Fig. 1A, the present reactor preferably has a pair of honeycomb electrode supports 36A for supporting and holding a honeycomb electrode 34A, which are made of an insulating material and disposed so as to sandwich the honeycomb electrode 34A and face each other.

As the insulating material constituting the honeycomb electrode supports, a ceramics can be used preferably. There can be preferably used, for example, alumina, zirconia, silicon nitride, aluminum nitride, SIALON, mullite, silica and cordierite. These ceramics may be used singly or in combination of two or more kinds.

As shown in Fig. 1A, the honeycomb electrode supports 36A are dispersed, in many cases, so as to sandwich the honeycomb electrode 34 from two directions for supporting and holding it and face each other. The reactor 1A shown in Fig. 1A is a case in which a pair of left and right honeycomb

electrode supports 36A sandwich a honeycomb electrode 34 from two (left and right) directions to hold and fix the honeycomb electrode 34.

[2-6] Power source

The power source is, as shown in Fig. 1A, a power source 14 for applying a voltage to a pair of electrodes 12 (a linear electrode 32 and a honeycomb electrode 34). As to the kind of the power source, there is no particular restriction; however, it is preferred to use a pulse power source capable of applying a voltage periodically. The pulse power source is particularly preferably a power source capable of supplying (a) an AC voltage waveform of 1 kV or higher in peak voltage and 1 or more in pulse number per second, (b) an AC voltage waveform of 1 kV or higher in peak voltage and 1 or more in frequency, (c) a DC waveform of 1 kV or higher in voltage, or (d) a voltage waveform obtained by overlapping at least two of the above waveforms. Use of a power source of 1 to 20 kV in peak voltage is preferred and use of a power source of 5 to 10 kV in peak voltage is more preferred.

As such a power source, there can be mentioned, for example, a high-voltage pulse power source which uses, as a switching element, a static induction type thyristor (SI thyristor) or a MOS-FET. In particular, a high-voltage pulse power source (for example, a product of NGK) using a SI thyristor as a switching element is preferably used because it can be used in wide applications. Incidentally, the "MOS-FET" means a field effect transistor (FET) having a gate electrode of three-layer structure of metal-semiconductor oxide-semiconductor.

[3] Production method

The reactor of the present invention can be produced, for example, as follows. A honeycomb structure to act as a honeycomb electrode is obtained by a known extrusion method. Specifically explaining, a puddle containing a ceramics powder is extruded into a desired shape, followed by drying and firing, to obtain a honeycomb structure to act as a honeycomb electrode. In this case, a conductive silicon carbide or the like is used as the raw material ceramics for obtaining the honeycomb structure. As to the reaction vessel, a tubular (cylindrical) reaction vessel is formed by a known metal processing method. In this case, an easily processable metal material such as stainless steel or the like is preferably used as the metal material for obtaining the reaction vessel.

On the partition walls of the above-obtained honeycomb electrode is loaded a catalyst. Beforehand, a catalyst component-containing aqueous solution is infiltrated into a ceramics powder to act as carrier fine particles, followed by drying and firing, to obtain catalyst-coated fine particles. To the catalyst-coated fine particles are added a dispersing medium (e.g. water) and other additives to prepare a coating fluid (a slurry). This slurry is coated on the partition walls of the honeycomb electrode, followed by drying and firing, to obtain a honeycomb electrode having a catalyst loaded on the partition walls.

Incidentally, in the honeycomb electrode used in the reactor of the present invention, it is necessary that the ratio of the maximum outer diameter of each cell-opening end face of the honeycomb electrode to the length of the honeycomb electrode in its cell-extending direction is in a particular range. Specifically explaining, such a honeycomb electrode can be obtained, for example, by extruding a honeycomb electrode so that the honeycomb electrode obtained satisfies, after firing, the above-mentioned ratio (firing causes contraction), or by cutting out, from the honeycomb structure after firing, a honeycomb electrode having a shape satisfying the above-mentioned ratio.

The above-obtained honeycomb structure (i.e. honeycomb electrode) is installed in the internal space of the reaction vessel via honeycomb electrode supports made of an insulating material such as alumina or the like. The honeycomb electrode is disposed apart from a linear electrode by a given distance so as to oppose the linear electrode. Lastly, the honeycomb electrode and the linear electrode are electrically connected with a power source, whereby a reactor can be constituted.

[4] [Method of use]

The reactor of the present invention can be suitably used for a reforming reaction, particularly a reforming reaction for obtaining a hydrogen-containing reformed gas from a to-be-reformed gas (a hydrocarbon compound or an alcohol).

As the "hydrocarbon compound", there can be mentioned, for example, light hydrocarbons such as methane, propane, butane, heptane, hexane and the like; and petroleum hydrocarbons such as isooctane, gasoline, kerosene, naphtha, gas oil and the like. As the "alcohol", there can be mentioned, for example, methanol, ethanol, 1-propanol, 2-propanol and 1-butanol. These to-be-reformed gases can be used singly or in admixture of two or more kinds.

As to the method of reforming, there is no particular restriction. There can be used, for example, any of partial reforming using oxygen, steam reforming using water, and autothermal reforming using oxygen and water.

The reforming reaction can be conducted by using the reactor of the present invention, introducing a to-be-reformed gas into the internal space of the reaction vessel, and applying, from the power source to the electrodes, a pulse voltage having one voltage waveform selected from (a) a pulse waveform of 1 kV or higher in peak voltage and 1 or more in pulse number per second, (b) an AC voltage waveform of 1 kV or higher in peak voltage and 1 or more in frequency, (c) a DC waveform of 1 kV or higher in voltage, and (d) a voltage waveform obtained by overlapping at least two of the above waveforms.

EXAMPLES

The reactor of the present invention is described more specifically by showing Examples. However, the present reactor includes all reactors satisfying the matters specified by the present invention and is in no way restricted to the following Examples.

[Production of reactors]

At first, reactors were produced as follows.

(Example 1)

A reactor 1A such as shown in Fig. 1A was produced. As the reaction vessel 10, there was used a hollow, quadrangular prism-shaped material of 40 mm (height) x 50 mm (width) x 90 mm (length), made of a stainless steel plate of 5 mm in thickness. Inside the reactor vessel 10 were fixed honeycomb electrode supports 36A made of alumina. To the honeycomb electrode supports 36A was fixed a honeycomb electrode 34A made of silicon carbide. Similarly, a linear electrode 32 was disposed on an alumina insulator.

As the honeycomb electrode 34A, there was used, as shown in Fig. 1B, a honeycomb structure made of silicon carbide (content: 75 mass %), in which a plurality of cells 16A to act as a gas passage were formed by being surrounded by partition walls. As the honeycomb structure, there was used a rectangular prism of 20 mm (height) x 22 mm (width) x 60 mm (length) cut out from a silicon carbide-made diesel particulate filter [SiC-DPF (trade name), a product of NGK] used for capturing a particulate matter contained in engine exhaust gas or the like. This honeycomb structure had a rectangular shape at the cell-opening end faces and the maximum outer diameter at the cell-opening end faces (i.e. the diagonal length of the rectangle) of 30 mm. That is, the ratio of the maximum outer diameter $d_1$ of each cell 16A-opening end face to the length $L_1$ in the cell 16A-extending direction (the ratio is expressed as "maximum outer diameter-to-length ratio" in Tables) was 0.5. Incidentally, the honeycomb structure had a square cell shape of 1 mm x 1 mm and a cell density of 48 cells/cm$^2$.

Also from the SiC-DPF was cut out a rectangular prism of 3.3 cm (length) and 1.1 cm$^2$ (area of the section perpendicular to the direction of gas flowing), along the direction of gas flowing. Electric resistance of the rectangular prism was measured under a temperature condition of 180°C by a constant DC four-terminal method with a distance between voltage terminals being 2.3 cm. The electric resistance was 0.2 Q. The thermal conductivity of the rectangular prism was 100 W/mK.

The honeycomb structure was loaded with a catalyst at the partition walls surrounding cells. Beforehand, an aqueous rhodium (III) nitrate [Rh(NO$_3$)$_3$] solution containing a catalyst component Rhodium was infiltrated into an alumina powder (specific surface area: 107 m$^2$/g) to later act as carrier fine particles, followed by drying at 120°C and firing at 550°C for 3 hours in the air, to obtain a catalyst-coated fine particles. The mass ratio of rhodium to alumina was 0.5 mass %.

To the catalyst-coated fine particles were added a dispersing medium (water) and an alumina sol; the mixture was adjusted to a pH of 4 to obtain a coating fluid (a slurry). The honeycomb electrode was immersed in this slurry to coat the slurry on the partition walls, followed by drying at 120°C and firing at 550°C for 1 hour in a nitrogen atmosphere, to obtain a honeycomb electrode having a catalyst loaded on the partition walls. The amount of Rhodium loaded on the honeycomb electrode was 1.5 g/liter.

As the linear electrode 32, there was used a rod-like material of 10 mm in length and 0.5 mm in outer diameter, made of stainless steel. The honeycomb electrode 34 was disposed so that its distance from the linear electrode 32 became 5 mm. Incidentally, in the reactor 1A, the linear electrode 32 was used as a positive electrode.

Incidentally, the honeycomb electrode supports 36A were allowed to abut the outer walls of the honeycomb electrode 34A, as shown in Fig. 1A.

As the power source 14, there was used a high-voltage pulse power source (a product of NGK) using a SI thyristor as the switching element. The power source 14 was electrically connected to the linear electrode 32 (positive electrode) and the honeycomb electrode 34 (negative electrode).

(Examples 2 to 4 and Comparative Examples 1 to 2)

Reactors were constituted in the same manner as in Example 1 except that the maximum outer diameter-to-length ratio of honeycomb electrode was changed. Specifically, each reactor was constituted using a honeycomb reactor shown in Table 1, in which the end face shape (height: 20 mm, width: 22 mm, maximum outer diameter: 30 mm) and the cell density (48 cells/cm$^2$ were the same as in Example1 and only the length was changed. Using the reactors of Examples 1 to 4 and Comparative Examples 1 to 2, there were examined the influences of the maximum outer diameter-to-length ratio of honeycomb electrode on the reaction efficiency of reforming reaction.

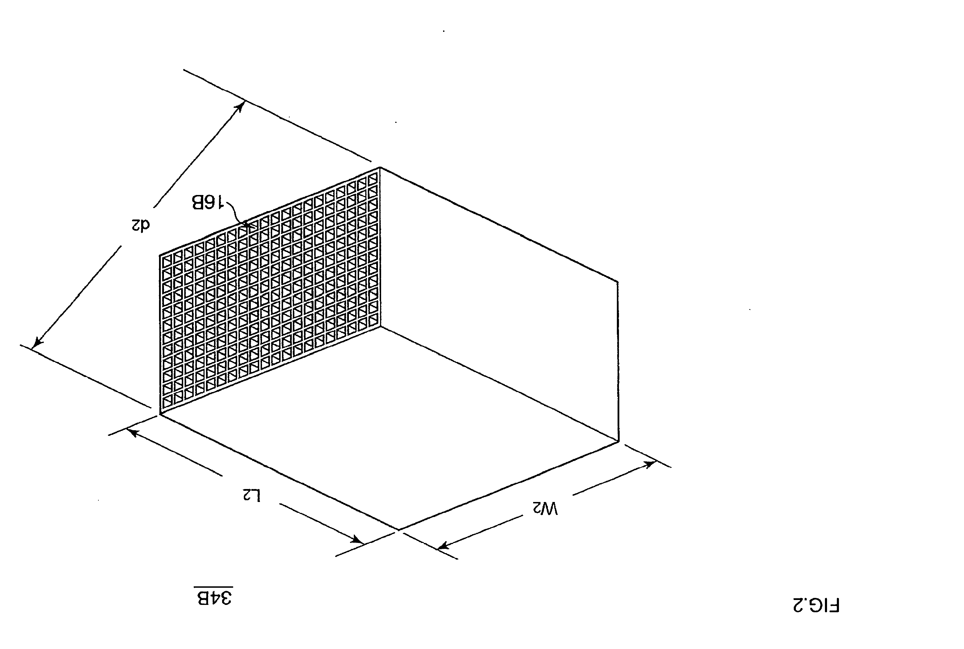

The honeycomb electrode 34B used in the reactor of Example 2 is shown in Fig. 2. This honeycomb electrode 34B was a rectangular prism of 20 mm (height) x 22 mm (width) x 40 mm (length) and had a ratio of the maximum outer diameter $d_2$ of cell-opening end face to the length $L_2$ in cell-extending direction, of 0.75.

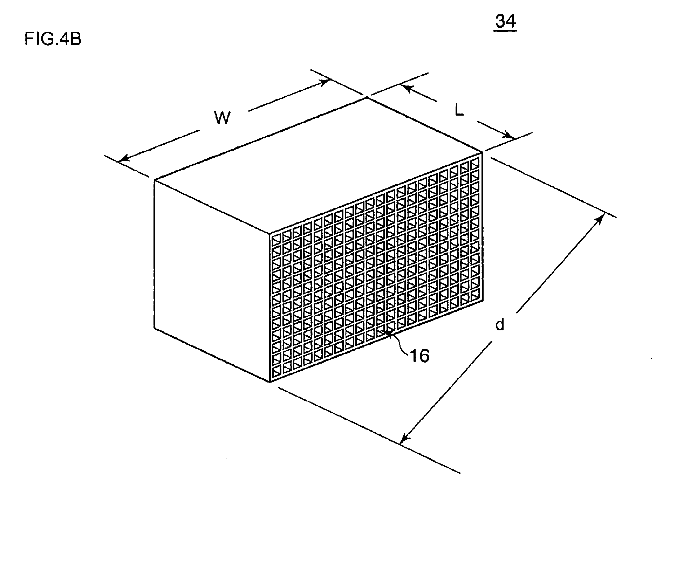

Also, the reactor of Comparative Example 2 is shown in Fig. 4A and the honeycomb electrode 34 used in the reactor of Comparative Example 2 is shown in Fig. 4B. The honeycomb electrode 34 was a rectangular prism of 20 mm (height) x 22 mm (width) x 20 mm (length) and had a ratio of the maximum outer diameter d of cell 16-opening end face to the length L in cell 16-extending direction, of 1.5.

Table 1

| | Shape of honeycomb electrode | | | | | | | Hydrogen formation ratio (%) |
|---|---|---|---|---|---|---|---|---|
| | Height (mm) | Width (mm) | Maximum outer diameter (mm) | Length (mm) | Cell density | | Maximum outer diameter-to-length ratio | |
| | | | | | cells/cm$^2$ | cells/in$^2$ | | |
| Comparative Example 1 | 20 | 22 | 30 | 65 | 48 | 300 | 0.46 | 29 |
| Example 1 | 20 | 22 | 30 | 60 | 48 | 300 | 0.50 | 46 |
| Example 2 | 20 | 22 | 30 | 40 | 48 | 300 | 0.75 | 42 |
| Example 3 | 20 | 22 | 30 | 30 | 48 | 300 | 1.0 | 39 |
| Example 4 | 20 | 22 | 30 | 25 | 48 | 300 | 1.2 | 36 |
| Comparative Example 2 | 20 | 22 | 30 | 20 | 48 | 300 | 1.5 | 22 |

(Examples 5 to 7 and Comparative Examples 3 and 4)

Reactors were constituted in the same manner as in Example 4 except that the cell density of honeycomb electrode was changed. Specifically, each reactor was constituted using a honeycomb reactor shown in Table 2, in which the end face shape (height: 20 mm, width: 22 mm), the length (25 mm) and the maximum outer diameter-to-length ratio (1.2) were not changed and only the cell density was changed. Using the reactors of Examples 4 to 7 and Comparative Examples 3 to 4, there were examined the influences of the maximum outer diameter-to-length ratio of honeycomb electrode on the reaction efficiency of reforming reaction.

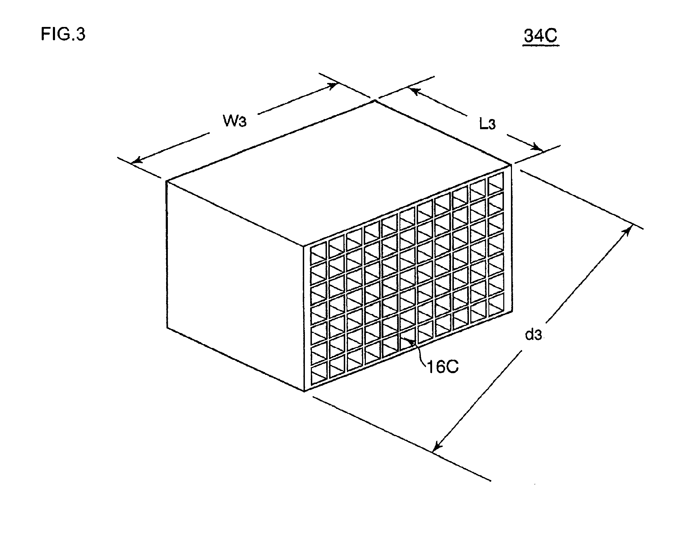

The honeycomb electrode 34C used in the reactor of Example 6 is shown in Fig. 3. This honeycomb electrode 34C was a rectangular prism of 20 mm (height) x 22 mm (width) x 25 mm (length) and had a ratio of the maximum outer diameter $d_3$ of cell-opening end face to the length $L_3$ in cell-extending direction, of 1.2. Also, the honeycomb electrode had a cell density of 28 cells/cm$^2$ (175 cells/in$^2$).

Table 2

| | Shape of honeycomb electrode | | | | | | | Hydrogen formation ratio (%) |
|---|---|---|---|---|---|---|---|---|
| | Height (mm) | Width (mm) | Maximum outer diameter (mm) | Length (mm) | Cell density | | Maximum outer diameter-to-length ratio | |
| | | | | | Cells/cm$^2$ | cells/in$^2$ | | |
| Comparative Example 3 | 20 | 22 | 30 | 25 | 1.6 | 10 | 1.2 | 25 |
| Example 5 | 20 | 22 | 30 | 25 | 4.0 | 25 | 1.2 | 33 |
| Example 6 | 20 | 22 | 30 | 25 | 28 | 175 | 1.2 | 34 |

(continued)

| | | | | | | | | |
|---|---|---|---|---|---|---|---|---|
| Comparative Example 3 | 20 | 22 | 30 | 25 | 1.6 | 10 | 1.2 | 25 |
| Example 4 | 20 | 22 | 30 | 25 | 48 | 300 | 1.2 | 36 |
| Example 7 | 20 | 22 | 30 | 25 | 192 | 1200 | 1.2 | 38 |
| Comparative Example 4 | 20 | 22 | 30 | 25 | 208 | 1300 | 1.2 | 30 |

[Test for hydrocarbon reforming]

A test for hydrocarbon reforming was conducted using the reactors of Examples and Comparative Examples. Specifically explaining, a partial oxidation reaction for pentadecane ($C_{15}H_{32}$), shown by the following formula (1) was conducted. The to-be-reformed gas used was a nitrogen gas containing 2,000 ppm of pentadecane ($C_{15}H_{32}$) and 15,000 ppm of oxygen. The to-be-reformed gas was prepared by injecting a given amount of pentadecane using a high-pressure micro-feeder [JP-H Model (trade name), a product of Furue Science]. The pentadecane was vaporized using a plate heater placed in a pipe and then introduced.

$$C_{15}H_{32} + 7.5O_2 \rightarrow 16H_2 + 15CO \qquad (1)$$

The to-be-reformed gas was fed into a reactor and a reforming reaction (partial oxidation) was conducted. A pulse voltage was applied to the pair of electrodes from the power source under the conditions of a repeating interval of 3 kHz and a peak voltage of 5 kV. In this case, the power used was 50 W. The space velocity (SV) of the to-be-reformed gas inside the reaction vessel was adjusted to be 80,000 h$^{-1}$ in each cell of the honeycomb electrode.

A hydrogen amount was measured for the reformed gas obtained from the reforming reaction. The measurement of the hydrogen amount was conducted using TCD (thermal conduction detector)-containing gas chromatography (GC 3200 produced by G. L. Science, carrier gas: argon). From this hydrogen amount and the above-shown formula (1) was calculated the pentadecane amount consumed by the reforming reaction, and the hydrogen formation ratio was calculated from the following formula (2). A hydrogen formation ratio of 30 mass % or more was rated as "extremely good"; a hydrogen formation ratio of 25 mass % to less than 30 mass % was rated as "good"; and a hydrogen formation ratio of less than 25 mass was rated as "bad". The results are shown in Tables 1 and 2.

```
Hydrogen formation ratio (mass %) = (pentadecane amount

calculated from hydrogen amount in a to-be-reformed gas/pentadecane amount in a reformed gas) x 100    (2)
```

The reactors of Examples 1 to 4 showed a high hydrogen formation ratio, as compared with those of Comparative Examples 1 to 2. From these results, it is considered that, since each electrode used was long in its cell-extending direction, the contact time with catalyst (i.e. reaction time) was extended and accordingly the reaction heat generated increased, whereby the reforming reaction was advanced easily and the reformed gas could be obtained efficiently. That is, in Examples 1 to 4, although the same power as in Comparative Examples 1 to 2 was used, the reformed gas (hydrogen) could be obtained efficiently.

Meanwhile, in the reactor of Comparative Example 1, the hydrogen formation ratio was low although the length of honeycomb electrode in its cell-extending direction was large. The reason is considered to be that, in the reactor of Comparative Example 1, although the contact time between to-be-reformed gas and catalyst was extended, the pressure loss when a to-be-reformed gas passed through the cells of honeycomb electrode, was large and the space velocity when the to-be-reformed gas was treated, was low. It is also considered that the reaction heat did not arrive at the ends of honeycomb electrode and there was obtained no high reaction efficiency due to the temperature increase of honeycomb electrode.

Also, in the reactor of Comparative Example 2, it is considered that, since the honeycomb electrode was short in its cell-extending direction, the contact time (reaction time) between the to-be-reformed gas and the catalyst loaded on partition walls surrounding cells was short and the catalyst could not exhibit its effect sufficiently. That is, it is considered that the reformed gas passed through the cells of honeycomb electrode before the gas utilized the reaction heat generated in the cells and there was no sufficient promotion of the reforming reaction.

From the results of Examples 1 to 4 and Comparative Examples 1 to 2, it was confirmed that the ratio of the width of each cell-opening end face of honeycomb electrode to the length of honeycomb electrode in its cell-extending direction is preferred to be in a range of 0.50 to 1.2.

The reactors of Examples 4 to 7 showed a high hydrogen formation ratio, as compared with those of Comparative Examples 3 to 4. This indicates that it is important to set, in an appropriate range, the maximum outer diameter of each cell-opening end face of honeycomb electrode relative to the length of honeycomb electrode in its cell-extending direction and further to set, in an appropriate range, the cell density of honeycomb electrode. From these results, it is considered that, by setting, in appropriate ranges, both of the maximum outer diameter-to-length ratio of honeycomb electrode and the cell density of honeycomb electrode, the reforming reaction was advanced efficiently owing to the synergistic effect of the action of plasma and the action of catalyst, the reaction heat arrived as far as the ends of honeycomb electrode, and there was obtained a high reaction efficiency owing to the temperature increase of honeycomb electrode.

Meanwhile, in the reactor of Comparative Example 3, the cell density of honeycomb electrode was small. Therefore, it is considered that the contact time (reaction time) between the to-be-reformed gas and the catalyst loaded on partition walls surrounding cells was short and the catalyst could not exhibit its effect sufficiently. It is also considered that the reformed gas passed through the cells of honeycomb electrode before the gas utilized the reaction heat generated in the cells and there was no sufficient promotion of the reforming reaction.

Also, in the reactor of Comparative Example 4, the hydrogen formation ratio was low although the length of honeycomb electrode in its cell-extending direction was large. The reason is considered to be that, in the reactor of Comparative Example 4, although the contact time between to-be-reformed gas and catalyst was extended, the pressure loss when a to-be-reformed gas passed through the cells of honeycomb electrode, was large and the space velocity when the to-be-reformed gas was treated, was low. It is also considered that the reaction heat did not arrive at the ends of honeycomb electrode and there was obtained no high reaction efficiency due to the temperature increase of honeycomb electrode.

From the results of Examples 4 to 7 and Comparative Examples 3 to 4, it was confirmed that the cell density of honeycomb electrode is preferred to be in a range of 4 to 192 cells/cm$^2$.

In the above Examples, cases of partial oxidation were shown. However, also in other reforming methods such as autothermal oxidation using oxygen and water, high hydrogen formation ratios were obtained as compared with the case of using a conventional reactor. Thus, the reactor of the present invention can be used in various reforming methods.

INDUSTRIAL APPLICABILITY

The reactor of the present invention can be used suitably in the reforming reaction of hydrocarbon compound or alcohol, particularly in a hydrogen formation reaction. The present reactor can supply a large amount of a reformed gas stably over a long period; accordingly, it can be suitably used also in applications such as fuel reformer for on-vehicle mounting.

**Claims**

1. A reactor comprising

   a reaction vessel having an inlet for a to-be-reformed gas and an outlet for a reformed gas,
   a pair of electrodes for plasma generation, disposed in an internal space of the reaction vessel so as to face each other,
   a power source for applying a voltage to the pair of electrodes, and
   a catalyst for promoting reforming reaction of the to-be-reformed gas,
   wherein
   one of the pair of electrodes is a linear electrode,
   the other of the pair of electrodes is a honeycomb electrode made of a conductive ceramics having a plurality of cells to act as gas passages partitioned by partition walls,
   the catalyst is loaded on the partition walls of the honeycomb electrode, and
   the honeycomb electrode has a cell density of 4 to 192 cells/cm$^2$ and the ratio of the maximum outer diameter of each cell-opening end face of the honeycomb electrode to the length of the honeycomb electrode in the cell-extending direction is in a range of 0.50 to 1.2.

2. A reactor according to Claim 1, wherein the honeycomb electrode is made of the conductive ceramics including silicon carbide.

**3.** A reactor according to Claim 1 or 2, wherein the honeycomb electrode has a density of 0.5 to 4.0 g/cm$^3$.

**4.** A reactor according to any one of Claims 1 to 3,
wherein the honeycomb electrode has a thermal conductivity of 10 to 300 W/mk.

**5.** A reactor according to any one of Claims 1 to 4,
wherein the power source is a high-voltage pulse power source using a static induction type thyristor.

FIG.1A

1A

FIG.1B

34A

W1

L1

d1

16A

EP 2 234 462 A2

FIG.2

34B

W2

L2

d2

16B

EP 2 234 462 A2

FIG.3

34C

W3

L3

d3

16C

FIG.4A

100

12(34)

36

10

42

12(32)

4

2

6

8

36

14

EP 2 234 462 A2

FIG.4B

<u>34</u>

W

L

d

16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003514166 A
- JP 2003073103 A
- JP 2006248847 A
- JP 2004345879 A
- JP 2006056748 A